# EUROPEAN PATENT APPLICATION

(11) **EP 2 351 503 A1**
(43) Date of publication of application: **03.08.2011**
(21) Application number: 08877922.8
(22) Date of filing: 10.11.2008
(51) Int. Cl.: A47J 37/06, F24C 15/14

(54) **BARBECUE OVEN**

(71) Applicant: Li, Yongde, Guangzhou, Guangdong 510095 (CN)
(72) Inventor: Li, Yongde, Guangzhou, Guangdong 510095 (CN)
(74) Representative: Meldrum, David James
(86) International application number: PCT/CN2008/001860
(87) International publication number: WO 2010/051656

(57) **Abstract**

A barbeque oven comprises a stove body (1), a fire source (2) provided on the stove body and a barbeque grill (3), wherein an oil receiving device is provided between the fire source (2) and the barbeque grill (3), wherein the oil receiving device comprises an oil receiving baffle plate (4), an oil guiding groove (5) and an oil collecting pot (6), wherein the oil receiving baffle plate is provided as a corrugated plate or a flat plate obliquely mounted and a plurality of flame penetrable apertures (7) are opened on the corrugated oblique surface (16) of the corrugated plate or in the flat plate, wherein an aperture covering device (8) is provided above said flame penetrable aperture (7), wherein said aperture covering device (8) is provided as a bevel sheet (17) with its upper edge in connection with the corrugated oblique surface or the flat plate, wherein a spacing (9) is provided between the aperture covering device and the flame penetrable apertures, wherein the oil guiding groove is obliquely mounted under the lower edge of the oil receiving baffle plate, and wherein the mouth of the oil collecting pot corresponds to the lower end of the oil guiding groove for oil collection. Flame or heat of fire can reach up to the foods and barbeque them through the flame penetrable apertures in the oil receiving baffle plate and then the spacing between the flame penetrable apertures and the aperture covering device, while the oil for barbecue and/or grease drippings when barbecuing will fall onto the oblique oil receiving baffle plate and finally flow to the oil collecting pot by means of the oil guiding groove, which avoids the oil for barbecue and/or grease drippings when barbecuing from falling onto the fire source.

## Description

### Technical Field

The present invention relates to a barbecue oven, and more particularly, to a barbecue oven capable of avoiding smoke caused by oil for barbecue falling onto a fire source.

### Background Art

Food barbequing has a long history. Use of fire originates from food barbequing such that humans have evolved into modern people. Barbequed food has a flavor that is beloved by people. The prior art barbecue oven generally comprises a oven body, a fire source arranged above the oven body and a barbecue grill. The fire sources consists of firewood, charcoal, oil or electric energy. The barbecue grill is usually directly arranged over the fire source so as to make full use of the ascending heat generated by the fire source. The disadvantages of such a barbecue oven are in that since oil for barbecue has to be applied to food during barbequing and some foods themselves will spill out grease after being heated, these oil and/or grease sometimes fall directly onto the fire source, thereby generating smoke which may rise up to fume foods and be inhaled by the barbequers. It is well known that smoke is bad for human health and pollutes environment, and smoked foods will render people susceptible to cancer and in poor health severely. To prevent the said oil from falling onto the fire source, some barbecue ovens are provided with two rows of upright electrothermal plates, between which foods are placed for barbequing. This solution is complicated in structure and low in thermal efficiency, has limitation in placement of foods to be barbequed and cannot completely prevent grease drippings from falling onto fire sources.

### Summary of the Invention

Directing to the shortcomings in the prior art, the technical problem to be solved by the present invention is to provide a barbecue oven capable of avoiding oil for barbecue from falling onto the fire source.

To solve the above-mentioned technical problem, the present invention can be achieved by the following technical solution:
a barbeque oven comprising a oven body, a fire source provided on the oven body and a barbeque grill above the fire source, characterized in that said oven body is also provided with an oil receiving device between the fire source and the barbeque grill, wherein the oil receiving device comprises an oil receiving baffle plate, an oil guiding groove and an oil collecting pot, wherein the oil receiving baffle plate is obliquely mounted and has a plurality of flame penetrable apertures thereon, wherein an aperture covering device is arranged above the flame penetrable apertures, and wherein a spacing is provided between the aperture covering device and the flame penetrable apertures, wherein the oil guiding groove is obliquely mounted under the oblique lower edge of the oil receiving baffle plate; and wherein the mouth of the oil collecting pot corresponds to the lower end of the oil guiding groove for oil collection.

In this case, flame or heat of fire can reach up to the foods and barbeque them through the flame penetrable apertures in the oil receiving baffle plate and then the spacing between the flame penetrable apertures and the aperture covering device, while the oil for barbecue will fall onto the oblique oil receiving baffle plate and finally flow to the oil collecting pot by means of the oil guiding groove, which avoids the said oil for barbecue from falling onto the fire source.

The oil receiving baffle plate and the aperture covering device of the barbeque oven according to the present invention can be in various forms:
the oil receiving baffle plate is made of a corrugated plate or a flat plate, wherein the flame penetrable apertures is opened on the corrugated oblique surface of the corrugated plate or in the flat plate;
the aperture covering device is provided as a bevel sheet with the upper edge thereof in connection with the corrugated oblique surface of the corrugated plate or the oblique surface of the flat plate;
the aperture covering device is provided as a top cover supported by at least two posts and larger than the flame penetrable aperture, wherein an upwardly convex annular edge is provided around the flame penetrable apertures of the oil receiving baffle plate; wherein the convex annular edge is capable of preventing oil for barbecue having fallen on the oil receiving baffle plate from dripping through the apertures, while the top cover that is larger than the flame penetrable aperture is capable of making the oil for barbecue on the top cover fall onto the oil receiving baffle plate outside of the flame penetrable aperture;
the top cover is provided as a tapered shell-like top cover facing downwards;
the top cover is provided as an invertedly arranged bowl-like inverted top cover, wherein the posts for support are provided as channel-section posts with outward facing notches, wherein each of the parts of the bowl floor plate corresponding to the top end of the posts is provided with a bowl bottom aperture; wherein the inverted wall of the bowl-like top cover is inclined upwardly in such a way that the flame can go up therealong, while the oil for barbecue having fallen in the bowl can flow through the bowl bottom apertures provided in the bowl floor plate along the channel-section posts with the outward facing notches to the exterior of the annular edges provided around the flame penetrable apertures;
the oil receiving baffle plate is sheet-like and is wholly obliquely mounted;
the oil receiving baffle plate is provided as a four-sided pyramidal shell or multi-sided pyramidal shell;
the oil receiving baffle plate is provided as a conical shell with the vertex upwards;
the oil receiving baffle plate is provided as a conical frustum shell with the vertex thereof downwards and partially intercepted, so that the received oil for barbecue flow to a circular hole formed by intercepting a part of the vertex in the center of the conical frustum shell, wherein the fire source is not arranged on the oven body just under the circular hole, wherein the oil guiding groove is slantingly mounted below the circular hole of the oil receiving baffle plate, and the mouth of the oil collecting pot corresponds to the lower end of the oil guiding groove for oil collection.

In contrast with the prior art, the advantageous effect of the present invention is to avoid generation of smoke caused by the oil for barbecue and/ or grease drippings when barbecuing falling onto the fire source due to the oil receiving baffle plate according to the invention arranged between the fire source and the barbeque grill.

### Description of the Drawings

Fig. 1 is an exploded perspective view illustrating the structure of the embodiment of the present invention;
Fig. 2 is a partial cross sectional view taken along line A-A of Fig. 1;
Fig. 3 is a partial cross sectional view taken along line B-B of Fig. 1;
Fig. 4 is an enlarged partial cross sectional view of the first type of oil receiving baffle plate of the embodiment;
Fig. 5 is a view of Fig. 4 viewed in C direction;
Fig. 6 is a cross sectional view of the portion of the second type of oil receiving baffle plate where flame penetrable apertures are provided;
Fig. 7 is a cross sectional view taken along line D-D of Fig. 6;
Fig. 8 is a cross sectional view of the portion of the third type of oil receiving baffle plate where flame penetrable apertures are provided;
Fig. 9 is a top view of Fig. 8;
Fig. 10 is a cross sectional view taken along line E-E of Fig. 8;
Fig. 11 is a perspective view of the fourth type of oil receiving baffle plate;
Fig. 12 is a perspective view of the fifth type of oil receiving baffle plate;
Fig. 13 is a side view of Fig. 12;
Fig. 14 is a perspective view of the sixth type of oil receiving baffle plate;
Fig. 15 is a side view of Fig. 14;

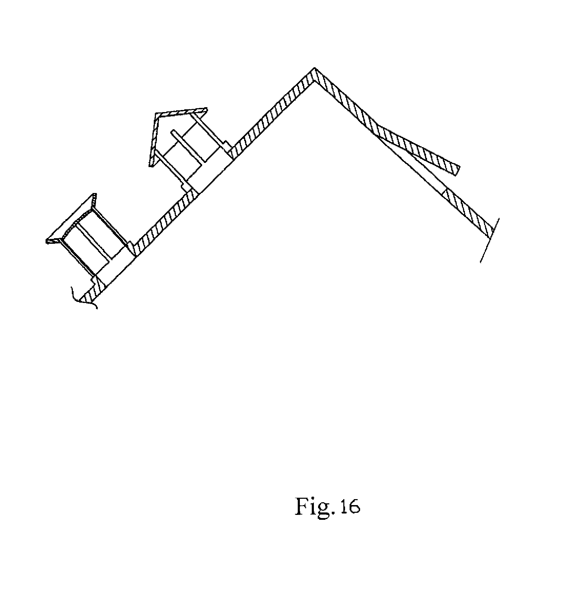

Fig. 16 is a cross sectional view of various aperture covering devices on the oil receiving baffle plate made of a flat sheet.

Wherein: 1 - oven body, 2 - fire source, 3 - barbecue grill, 4 - oil receiving baffle plate, 5 - oil guiding groove, 6 - oil collecting pot, 7 - flame penetrable aperture, 8 - aperture covering device, 9 - spacing, 10 - convex annular edge, 11 - tapered shell-like top cover, 12 - invertedly arranged bowl-like top cover, 13 - channel-section post, 14 - bowl bottom aperture, 16 - oblique surface, and 17 - bevel sheet.

### Detailed Description of the Embodiments

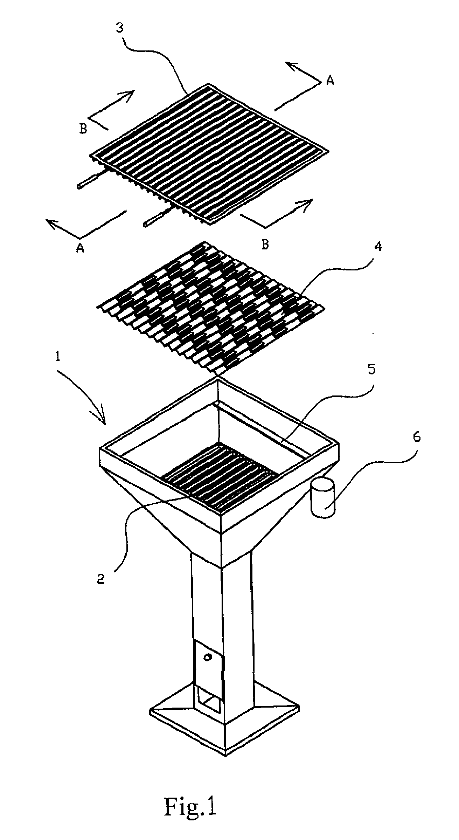

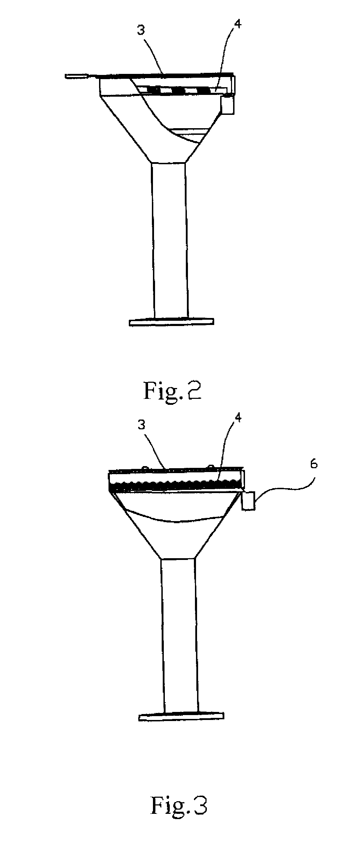

As shown in Figs. 1 to 5, the barbecue oven of the present invention comprises a oven body 1, a fire source 2 above the oven body and a barbeque grill 3 above the fire source, and an oil receiving device arranged between the fire source 2 and the barbeque grill 3 consisting of a first type of oil receiving baffle plate 4, an oil guiding groove 5 and an oil collecting pot 6.

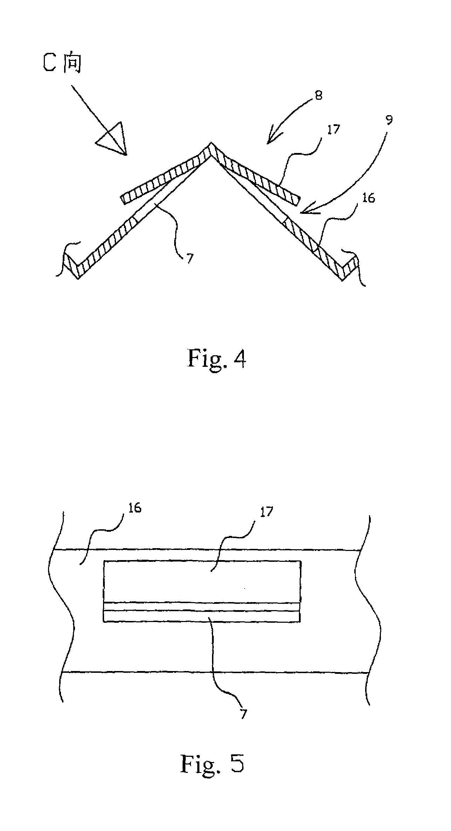

The first type of oil receiving baffle plate 4 is a sheet-like rectangular corrugated plate, the full sheet mounted slightly obliquely with one side higher and one side lower so as to facilitate the flow of the oil for barbecue or grease drippings having fallen on the oil receiving baffle plate 4 to the lower side. The oil receiving baffle plate 4 is provided with a plurality of flame penetrable apertures 7 that are on the oblique surfaces 16 of the corrugated plate, and an aperture covering device 8 provided above the flame penetrable aperture 7 with a spacing 9 between the aperture covering device 8 and the flame penetrable aperture 7. The aperture covering device 8 of the first type of oil receiving baffle plate 4 of this embodiment is a bevel sheet 17 with its upper edge in connection with the corrugated oblique surface, as shown in Figs. 4 and 5; the oil guiding groove 5 is slantingly mounted below the oblique lower side of the oil receiving baffle plate 4 for receiving the oil for barbecue or grease drippings flowing along the surface of the oblique oil receiving baffle plate 4 and guiding the oil for barbecue or grease drippings to the oil collecting pot 6, and the mouth of the oil collecting pot 6 corresponds to the lower end of the oil guiding groove 5 for oil collection at that place.

It is for sure that the oil receiving baffle plate 4 of this embodiment may be also made of a flat plate with the flame penetrable apertures 7 opened on the oblique surface of the flat plate, which also functions to baffle and collect oil.

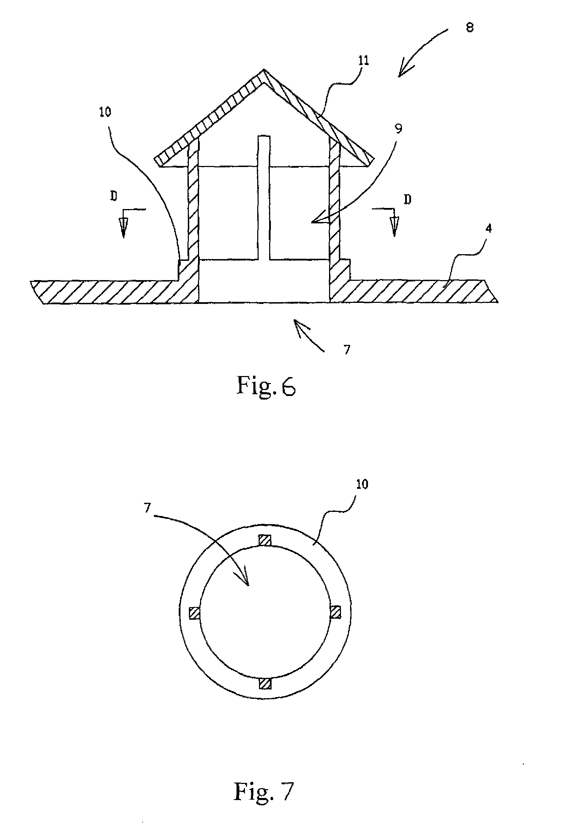

On the basis of above embodiment, the oil receiving baffle plate 4 may also have other variants, for instance, the second type of oil receiving baffle plate as shown in Figs. 6 and 7. Similarly, the oil receiving baffle plate 4 may be made of a corrugated plate or a flat plate with the flame penetrable apertures 7 opened on the corrugated oblique surface 16 of the corrugated plate or on the oblique surface of the flat plate.

The second type of oil receiving baffle plate has the flame penetrable apertures 7 with an upwardly convex annular edge 10, and the aperture covering device 8 is a tapered shell-like top cover 11 supported by four posts, which is larger than the flame penetrable aperture 7 and opens downwards.

The convex annular edge 10 may prevent the oil having fallen on the oil receiving baffle plate 4 from dripping through the flame penetrable apertures 7, and the top cover that is larger than the flame penetrable aperture 7 will make the drippings on the top cover fall onto the oil receiving baffle plate 4 outside of the flame penetrable apertures 7.

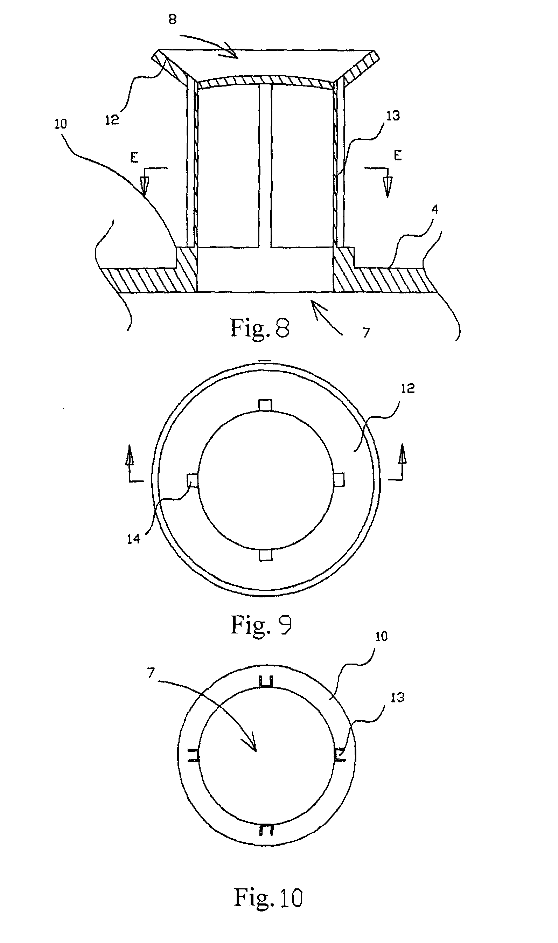

As shown in Figs. 8 to 10, the third type of oil receiving baffle plate 4 is made of a corrugated plate or a flat plate with the flame penetrable apertures 7 opened on the corrugated oblique surface 16 of the corrugated plate or on the oblique surface of the flat plate. The upwardly convex annular edge 10 is provided around the flame penetrable aperture 7, and the aperture covering device 8 is an invertedly arranged bowl-like top cover 12 supported by four posts, which is larger than the flame penetrable aperture 7. The support posts are channel-section posts 13 with their outward facing notches, and the area of the bowl floor plate corresponding to the top end of the post is provided with bowl bottom apertures 14.

Since the bowl edge is inclined upwards, the flame can go up therealong. Oil having fallen within the bowl can flow through the bowl bottom apertures provided in the bottom of the bowl and then flow along the channel-section posts with the outward facing notches to the exterior of the annular edges of the flame penetrable apertures.

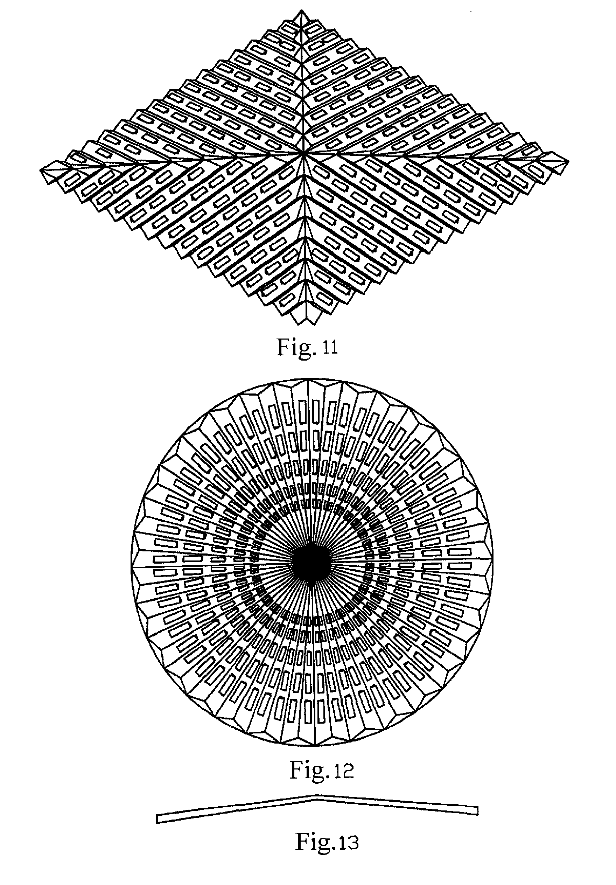

Fig. 11 is a perspective view of the fourth type of oil receiving baffle plate, which differs from the first embodiment in that the oil receiving baffle plate 4 is a four-sided pyramidal shell, and the received oil for barbecue when barbecuing flows along the four oblique pyramidal surfaces of the pyramidal shell and is guided to the oil collecting pot 6 by the oil guiding groove 5 slantingly mounted below the lower sides of the four pyramidal surfaces.

The oil receiving baffle plate 4 of this embodiment may also be made of four flat plates with the flame penetrable apertures 7 opened on the four pyramidal surfaces, which may also function to baffle and collect oil.

Figs. 12 and 13 are perspective views of the fifth type of oil receiving baffle plate, which differs from the first embodiment in that the oil receiving baffle plate 4 is a conical shell with the vertex upwards, and the received oil for barbecue flows along the oblique conical surface and is guided to the oil collecting pot 6 by the oil guiding groove 5 slantingly mounted below the lower sides of the conical surface. The oil receiving baffle plate 4 of this embodiment may also be made of a flat plate.

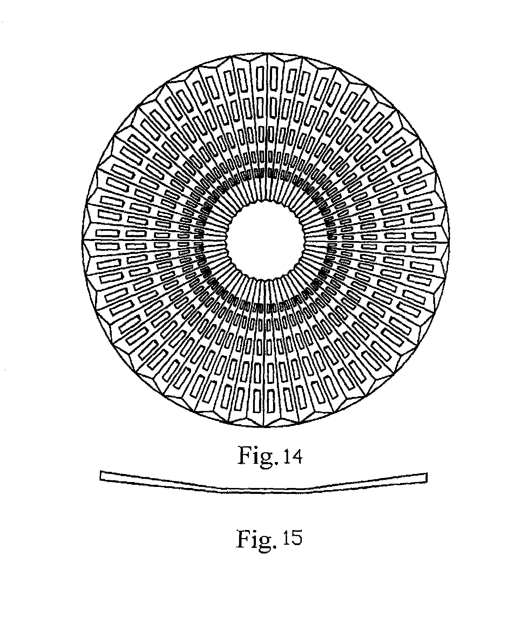

Figs. 14 and 15 are perspective views of the sixth type of oil receiving baffle plate, which differs from the fifth embodiment in that the oil receiving baffle plate 4 is a truncated conical shell with the vertex downwards and partially intercepted, and the received oil for barbecue flows to a circular hole formed by partially intercepting the vertex in the center of the truncated conical shell, the fire source is not arranged at the oven body just under the circular hole, the oil guiding groove is slantingly mounted below the circular hole of the oil receiving baffle plate, and the mouth of the oil collecting pot corresponds to the lower end of the oil guiding groove for oil collection.

The oil receiving baffle plate 4 of all the above embodiments is made of a corrugated plate with the flame penetrable apertures 7 opened on the corrugated oblique surface 16 of the corrugated plate. Actually, the oil receiving baffle plate 4 may also be made of a flat plate with the flame penetrable apertures 7 directly opened on the surface of the flat plate. Since the flat plate is mounted obliquely, the aperture covering device may also be configured in the form of a bevel sheet with its upper edge in connection with the obliquely mounted flat plate for achieving the object of the present invention.

The oil receiving baffle plate can not only be a sheet-like or four-sided pyramidal shell, a conical shell with the vertex upwards, a conical shell with the vertex downwards and partially intercepted, a flat plate, but also a gable-roof made by two corrugated plates or flat plates lapped, or a six-sided pyramidal shell or an eight-sided pyramidal shell. Any type of the oil receiving baffle plate is applicable as long as it conforms to the shape of the oven body, and has oblique surfaces allowing the received oil for barbecue to flow therealong and is provided with flame penetrable apertures and provided with the aperture covering devices.

## Claims

1. A barbecue oven, comprising a oven body (1), a fire source (2)above said oven body and a barbeque grill (3) above said fire source (2), **characterized in that** said oven body (1) is also provided with an oil receiving device arranged between said fire source (2) and said barbeque grill (3), said oil receiving device comprising an oil receiving baffle plate (4), an oil guiding groove (5) and an oil collecting pot (6), wherein the said oil receiving baffle plate (4) is obliquely mounted and provided with a plurality of flame penetrable apertures (7), wherein an aperture covering device (8) provided above said flame penetrable aperture (7) with a spacing (9) between said aperture covering device (8) and said flame penetrable apertures (7), wherein the said oil guiding groove (5) is slantingly mounted below the oblique lower side of said oil receiving baffle plate (4), and wherein the mouth of said oil collecting pot (6) corresponds to the lower end of said oil guiding groove (5) for oil collection.

2. The barbecue oven according to claim 1, **characterized in that** said oil receiving baffle plate (4) is made of a corrugated plate or a flat plate with said flame penetrable aperture (7) opened on the corrugated oblique surface (16) of said corrugated plate or on the oblique surface of the said flat plate obliquely mounted.

3. The barbecue oven according to claim 2, **characterized in that** said aperture covering device (8) is a bevel sheet (17) with its upper edge in connection with said corrugated oblique surface (16) of said corrugated plate or the oblique surface of said flat plate.

4. The barbecue oven according to claim 2, **characterized in that** said aperture covering device (8) is a top cover supported by at least two posts and larger than said flame penetrable aperture, wherein an upwardly convex annular edge (10) is provided around said flame penetrable apertures (7) of said oil receiving baffle plate (4).

5. The barbecue oven according to claim 4, **characterized in that** said top cover is a tapered shell-like top cover (11) facing downwards.

6. The barbecue oven according to claim 4, **characterized in that** said top cover is a invertedly arranged bowl-like inverted top cover (12), wherein the posts for support are provided as channel-section posts (13) with outward facing notches, wherein each of the parts of said bowl floor plate corresponding to the top end of said posts is provided with a bowl bottom aperture (14).

7. The barbecue oven according to any one of claims 3 to 6, **characterized in that** said oil receiving baffle plate (4) is sheet-like and is wholly obliquely mounted to one side.

8. The barbecue oven according to any one of claims 3 to 6, **characterized in that** said oil receiving baffle plate (4) is a four-sided pyramidal shell or a multi-sided pyramidal shell.

9. The barbecue oven according to any one of claims 3 to 6, **characterized in that** said oil receiving baffle plate (4) is a conical shell with the vertex thereof upwards.

10. The barbecue oven according to any one of claims 3 to 6, **characterized in that** said oil receiving baffle plate (4) is a conical frustum shell with the vertex thereof downwards.
